# EUROPÄISCHE PATENTSCHRIFT

(11) **EP 2 191 696 B1**
(45) Veröffentlichungstag und Bekanntmachung des Hinweises auf die Patenterteilung: **29.08.2012**
(21) Anmeldenummer: 07820381.7
(22) Anmeldetag: 20.09.2007
(51) Int. Cl.: H05B 41/285

(54) **ELEKTRONISCHES BETRIEBSGERÄT ZUM BETREIBEN MINDESTENS EINER ENTLADUNGSLAMPE**
ELECTRONIC OPERATING DEVICE FOR OPERATING AT LEAST ONE DISCHARGE LAMP
APPAREIL DE COMMANDE ÉLECTRONIQUE POUR FAIRE FONCTIONNER AU MOINS UNE LAMPE À DÉCHARGE

(43) Veröffentlichungstag der Anmeldung: 02.06.2010
(73) Patentinhaber: OSRAM AG, 81543 München (DE)
(72) Erfinder: WERNI, Horst, 80937 München (DE)
(86) Internationale Anmeldenummer: PCT/EP2007/059938
(87) Internationale Veröffentlichungsnummer: WO 2009/039879

(56) Entgegenhaltungen:
- WO-A-2006/093216
- DE-A1- 4 418 886
- US-B1- 6 169 374

## Beschreibung

### Technisches Gebiet

Die vorliegende Erfindung betrifft ein elektronisches Betriebsgerät zum Betreiben mindestens einer Entladungslampe mit einem zweipoligen Anschluss zum Anschließen des elektronischen Betriebsgeräts an eine Versorgungsspannung mit einem ersten Pol und einem zweiten Pol, einer mit dem zweipoligen Anschluss gekoppelten Filtervorrichtung zur Filterung von EMV-Störungen, einem Gleichrichter, der mit der Filtervorrichtung gekoppelt ist und einen ersten und einen zweiten Ausgangsanschluss aufweist, wobei der erste Ausgangsanschluss zur Bereitstellung eines ersten Bezugspotentials mit einer ersten Spannungsschiene und der zweite Ausgangsanschluss zur Bereitstellung eines zweiten Bezugspotentials mit einer zweiten Spannungsschiene gekoppelt ist, wobei der Gleichrichter ausgelegt ist, zwischen seinem ersten und seinem zweiten Ausgangsanschluss eine Gleichspannung bereit zu stellen, einem Wechselrichter mit mindestens einem ersten und einem zweiten elektronischen Schalter, der zwischen die erste und die zweite Spannungsschiene gekoppelt ist, wobei der Mittelpunkt des Wechselrichters mit einem Anschluss für die mindestens eine Entladungslampe gekoppelt ist, und einer Überwachungs- und Steuervorrichtung, die zwischen die erste und die zweite Spannungsschiene gekoppelt ist und mindestens einen Eingangsanschluss aufweist, der mit der mindestens einen Entladungslampe koppelbar ist, um mindestens einen Betriebsparameter der mindestens einen Entladungslampe zu überwachen. Ein derartiges elektronisches Betriebsgerät ist bekannt, wobei beispielsweise als Überwachungs- und Steuervorrichtung ein Infineon IFX verwendet wird. Dabei werden über mehrere Eingangsanschlüsse des IFX verschiedene Signale überwacht, beispielsweise die Brennspannung, eine mögliche Asymmetrie, die Zwischenkreisspannung, die Frequenz und dergleichen. In dem IFX werden die über die Eingangsanschlüsse erhaltenen Signale verknüpft, ausgewertet und können so zu einer Abschaltung des Betriebs der Entladungslampe führen. Im realen Betrieb sind jedoch die an den Eingangsanschlüssen anliegenden Signale sowie die Versorgung des IFX mit Störungen überlagert. Diese können einerseits eine zuverlässige Überwachung stören, können andererseits eine unberechtigte Abschaltung durchführen. DE4418886 A1 offenbart eine getaktete Stromversorgung zum Betreiben elektrischer Lamper, wobei eine Funkentstörschaltung eine gesteuerte Zusatzquelle aufweist.

Die an dem zweipoligen Anschluss anliegende Versorgungsspannung kann eine Wechselspannung sein, kann jedoch auch insbesondere im Notbetrieb, eine Gleichspannungsversorgung sein.

### Stand der Technik

Im Stand der Technik werden derart hochempfindliche Überwachungs- und Steuervorrichtungen entweder in einem Metallgehäuse untergebracht, was mit erhöhten Kosten einhergeht und sinnvoll nur eingesetzt werden kann, wenn ein Schutzerde-Anschluss zur Verfügung steht. Alternativ wird die Abschaltschwelle relativ hoch gewählt, was jedoch zur Folge hat, dass das elektronische Betriebsgerät bei einem starken Anstieg der Lampenbrennspannung ausfallen kann oder für diesen Fall entsprechend überdimensioniert werden muss.

### Darstellung der Erfindung

Die der vorliegenden Erfindung zugrundeliegende Aufgabe besteht darin, ein eingangs genanntes elektronisches Betriebsgerät derart weiter zu bilden, dass damit der Betrieb ohne Verwendung eines Metallgehäuses, d.h. bei Unterbringung eines derartigen elektronischen Betriebsgeräts in einem Kunststoffgehäuse ohne Schutzerde-Anschluss, unter Bereitstellung einer zuverlässigen Überwachung einer angeschlossenen Entladungslampe sichergestellt werden kann.

Diese Aufgabe wird gelöst durch ein elektronisches Betriebsgerät mit den Merkmalen von Patentanspruch 1.

Der vorliegenden Erfindung liegt die Erkenntnis zugrunde, dass ein Großteil der die an den Eingangsanschlüssen der Überwachungs- und Steuervorrichtung anliegenden Signale überlagernden Störungen von den in einem elektronischen Betriebsgerät vorhandenen elektronischen Schaltern herrührt, beispielsweise der Schalter des Wechselrichters. Diese überlagern sich nicht nur mit den an den Eingangsanschlüssen anliegenden Signalen, sondern beeinflussen auch die Versorgung der Überwachungs- und Steuervorrichtung. Da bei einem zweipoligen Anschluss zum Anschließen an eine Versorgungsspannung keine Schutzerde vorhanden ist, sieht die vorliegende Erfindung ein Auskoppelnetzwerk mit mindestens einem Eingangsanschluss und mindestens einem Ausgangsanschluss vor, wobei der mindestens eine Eingangsanschluss des Auskoppelnetzwerks mit einer der Spannungsschienen gekoppelt ist und wobei der mindestens eine Ausgangsanschluss des Auskoppelnetzwerks mit einem der Pole gekoppelt ist. Dadurch werden hochfrequente Störungen, die an den Versorgungsanschlüssen der Überwachungs- und Steuervorrichtung auftreten, zuverlässig abgeleitet, wobei, wenn der Eingangsanschluss des Auskoppelnetzwerks mit dem ersten Bezugspotential, das vorzugsweise das Pluspotential darstellt, verbunden ist, der Ausgangsanschluss des Auskoppelnetzwerks mit dem Line-Anschluss gekoppelt ist, während, wenn der Eingangsanschluss des Auskoppelnetzwerks mit dem zweiten Bezugspotential gekoppelt ist, d.h. insbesondere dem Minuspotential, der Ausgang des Auskoppelnetzwerks mit dem Neutral-Anschluss gekoppelt ist.

Dadurch kann auch ohne angeschlossene Schutzerde eine unerwünschte Abschaltung im Normalbetrieb (AC-Betrieb) oder im Notbetrieb (DC-Betrieb)zuverlässig verhindert werden. Ferner ist es dadurch auch möglich, die Abschaltung so zu dimensionieren, dass das elektronische Betriebsgerät bei einer stark ansteigenden Brennspannung der Entladungslampe nicht ausfällt. Wie sich hieraus ergibt, kann der erste Pol einen Line-Anschluss und der zweite Pol einen Neutral-Anschluss darstellen. Alternativ, insbesondere im Notbetrieb, kann der erste Pol einen Plus-Anschluss und der zweite Pol einen Minus-Anschluss darstellen.

Besonders bevorzugt ist, dass durch die vorliegende Erfindung der Bau von Schutzklasse-II-Leuchten, d.h. Leuchten ohne Metallgehäuse und ohne Schutzerde-Anschluss, ermöglicht wird. Das Auskoppelnetzwerk umfasst mindestens einen Kondensator, der seriell zwischen den mindestens einen Eingangsanschluss des Ausgangskoppelnetzwerks und den mindestens einen Ausgangsanschluss des Auskoppelnetzwerks gekoppelt ist. Dadurch ergibt sich eine besonders einfache und dennoch zuverlässige Realisierung eines erfindungsgemäßen elektronischen Betriebsgeräts. Dabei weist der Kondensator eine Kapazität zwischen 1 pF und 1 nF auf, insbesondere zwischen 10 pF und 100 pF.

Wie bereits erwähnt, ist gemäß einer bevorzugten Ausführungsform ein erfindungsgemäßes elektronisches Betriebsgerät in eine Leuchte der Schutzklasse II integriert. Die für Leuchten der Schutzklasse II geltenden Anforderungen liegen unter denen für Leuchten der Schutzklasse I und ermöglichen eine kostengünstigere Realisierung und Wartung. Zum letzten Punkt ist anzumerken, dass bei Leuchten der Schutzklasse II der Endanwender - anders als bei Leuchten der Schutzklasse I - keine jährliche kostenintensive Überprüfung der Schutzleiterverbindung durchführen lassen muss.

Bevorzugt liegt die Kopplung des mindestens einen Ausgangsanschlusses des Auskoppelnetzwerks mit einem der Pole auf der Seite der Filtervorrichtung, die dem zweipoligen Anschluss gegenüber liegt.

In einer bevorzugten Ausführungsform umfasst die Filtervorrichtung eine erste Teilfiltervorrichtung und eine zweite Teilfiltervorrichtung, die seriell zwischen den zweipoligen Anschluss und den Gleichrichter gekoppelt sind, wobei die Kopplung des mindestens einen Ausgangsanschlusses des Auskoppelnetzwerks mit einem der Pole zwischen der ersten und der zweiten Teilfiltervorrichtung liegt. Durch diese Maßnahme lassen sich zweistufige EMV-Filtervorrichtungen auf einfache Weise mit dem Grundgedanken, der der vorliegenden Erfindung zugrunde liegt, kombinieren.

Bevorzugt ist das Auskoppelnetzwerk derart zwischen eine der Spannungsschienen und einen der Pole gekoppelt, dass durch das Auskoppelnetzwerk mindestens eine Induktivität der Filtervorrichtung überbrückt wird.

Schließlich ist bevorzugt, wenn die Überwachungs- und Steuervorrichtung als integrierte Schaltung, insbesondere als ASIC ausgeführt ist.

Weitere bevorzugte Ausführungsformen ergeben sich aus den Unteransprüchen.

### Kurze Beschreibung der Zeichnungen

Im Nachfolgenden werden nunmehr zwei Ausführungsbeispiele eines erfindungsgemäßen Betriebsgeräts unter Bezugnahme auf die beigefügten Zeichnungen näher beschrieben. Es zeigen:
- Fig. 1: in schematischer Darstellung eine erste Ausführungsform eines erfindungsgemäßen elektronischen Betriebsgeräts; und
- Fig. 2: in schematischer Darstellung eine zweite Ausführungsform eines erfindungsgemäßen elektronischen Betriebsgeräts;

### Bevorzugte Ausführung der Erfindung

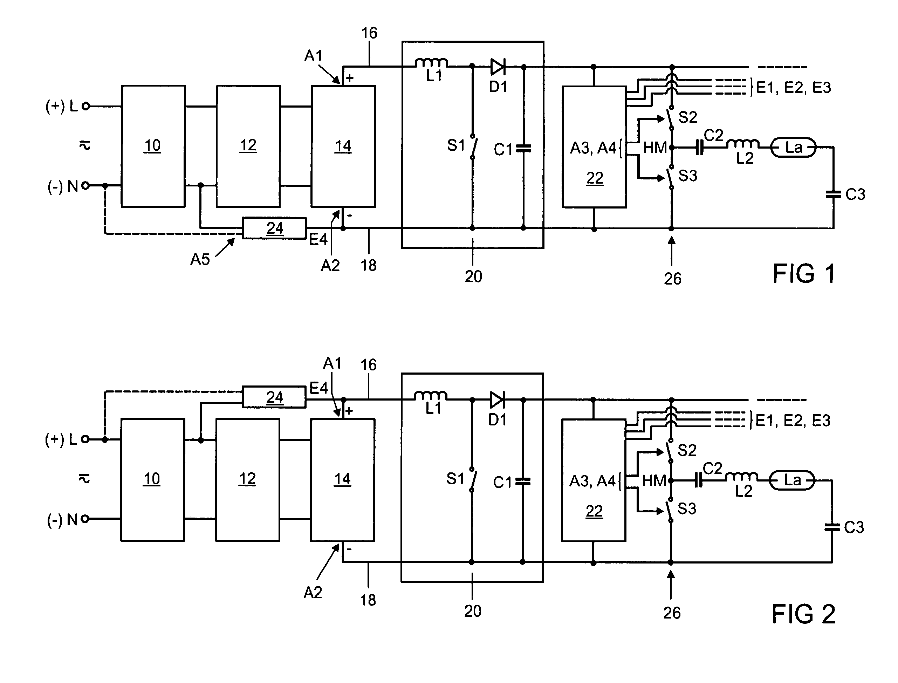

Fig. 1 zeigt in schematischer Darstellung den Aufbau eines ersten Ausführungsbeispiels eines erfindungsgemäßen elektronischen Betriebsgeräts. Dieses weist eingangsseitig zwei Pole L, N auf, wobei der Pol L einen Line-Anschluss und der Pol N einen Neutral-Anschluss darstellt. Darauf folgt eine erste Teilfiltervorrichtung 10, an die sich eine zweite Teilfiltervorrichtung 12 anschließt. Die erste Teilfiltervorrichtung 10 ist optional, wobei in ihr insbesondere Schaltgruppen zusammengefasst sind, die unkompensierte Drosseln und Kondensatoren aufweisen. Die zweite Teilfiltervorrichtung 12 umfasst insbesondere Schaltgruppen mit querangeordneten Kondensatoren, sogenannte Quer-C, und stromkompensierten Drosseln. Der Ausgang der Teilfiltervorrichtung 12 ist mit dem Eingang eines Gleichrichters 14 gekoppelt, dessen Ausgänge A1, A2 mit einer ersten Spannungsschiene 16 und einer zweiten Spannungsschiene 18 gekoppelt sind, zwischen denen eine Gleichspannung bereit gestellt wird. In dem Ausführungsbeispiel von Fig. 1 ist weiterhin eingezeichnet ein optionaler Spannungswandler 20, der eine Induktivität L1, einen Schalter S1, eine Diode D1 und einen Kondensator C1 umfasst. Vorliegend ist der Spannungswandler als Hochsetzsteller ausgeführt. Er kann ohne Beeinträchtigung der Erfindung auch als Tiefsetzsteller, als Buck-Konverter und dergleichen ausgeführt sein.

Eine Überwachungs- und Steuervorrichtung 22 ist zu ihrer Versorgung zwischen die erste Spannungsschiene 16 und die zweite Spannungsschiene 18 gekoppelt. Sie weist drei Eingänge E1 bis E3 auf, um mehrere Betriebsparameter einer Entladungslampe La zu überwachen. Sie weist weiterhin zwei Ausgänge A3, A4 auf, um die beiden Schalter S2, S3 einer Halbbrückenschaltung eines Wechselrichters 26 anzusteuern. Der Halbbrückenmittelpunkt HM ist über die Serienschaltung eines Kondensators C2 und einer Lampendrossel L2 mit der Entladungslampe La gekoppelt. Überdies ist ein Koppelkondensator C3 vorgesehen. Wie für den Fachmann offensichtlich, kann die Entladungslampe La auch auf andere Art und Weise beschaltet werden, ohne die Anwendung der vorliegenden Erfindung auszuschließen.

Erfindungsgemäß ist in dem Ausführungsbeispiel von Fig. 1 die Spannungsschiene 18 über ein Auskoppelnetzwerk 24, das einen Eingang E4 sowie einen Ausgang A5 aufweist, mit dem Neutral-Anschluss gekoppelt. Die Kopplung kann vor der ersten Teilfiltervorrichtung 10 erfolgen oder zwischen den beiden Teilfiltervorrichtungen 10 und 12.

Das Auskoppelnetzwerk umfasst einen nicht dargestellten Kondensator, der seriell zwischen den Eingangsanschluss E4 des Auskoppelnetzwerks 24 und den Ausgangsanschluss A5 des Auskoppelnetzwerks 24 gekoppelt ist.

Fig. 2 zeigt ein weiteres Ausführungsbeispiel eines erfindungsgemäßen elektronischen Betriebsgeräts, wobei Bauelemente, die denen von Fig. 1 entsprechen, mit denselben Bezugszeichen gekennzeichnet sind und nachfolgend lediglich auf die Unterschiede zu Fig. 1 eingegangen wird. In der Ausführungsform gemäß Fig. 2 ist der Eingang E4 des Auskoppelnetzwerks 24 mit der ersten Spannungsschiene 16 verbunden, während der Ausgang A5 mit dem Line-Anschluss gekoppelt ist, und zwar entweder vor der ersten Filtervorrichtung 10 oder zwischen der ersten 10 und der zweiten Filtervorrichtung 12.

Gemäß einer nicht dargestellten Ausführungsform ist der Ausgang A5 des Auskoppelnetzwerks 24 mit beiden eingezeichneten Kopplungspunkten gekoppelt.

Die Eingangsspannung, die zwischen dem Line-Anschluss und dem Neutral-Anschluss anliegt, kann sowohl eine Wechselspannung als auch eine Gleichspannung sein. Im Falle einer Gleichspannung wirkt der Gleichrichter 14 dann als Verpolschutz.

## Patentansprüche

1. Elektronisches Betriebsgerät zum Betreiben mindestens einer Entladungslampe (La) mit
- einem zweipoligen Anschluss zum Anschließen des elektronischen Betriebsgeräts an eine Versorgungsspannung mit einem ersten Pol (L) und einem zweiten Pol (N);
- einer mit dem zweipoligen Anschluss gekoppelten Filtervorrichtung (10, 12) zur Filterung von EMV-Störungen;
- einem Gleichrichter (14), der mit der Filtervorrichtung (10, 12) gekoppelt ist und einen ersten (A1) und einen zweiten Ausgangsanschluss (A2) aufweist, wobei der erste Ausgangsanschluss (A1) zur Bereitstellung eines ersten Bezugspotentials mit einer ersten Spannungsschiene (16) und der zweite Ausgangsanschluss (A2) zur Bereitstellung eines zweiten Bezugspotentials mit einer zweiten Spannungsschiene (18) gekoppelt ist, wobei der Gleichrichter (14) ausgelegt ist, zwischen seinem ersten (A1) und seinem zweiten Ausgangsanschluss (A2) eine Gleichspannung bereitzustellen;
- einem Wechselrichter (26) mit mindestens einem ersten (S1) und einem zweiten elektronischen Schalter (S2), der zwischen die erste (16) und die zweite Spannungsschiene (18) gekoppelt ist, wobei der Mittelpunkt des Wechselrichters (26) mit einem Anschluss für die mindestens eine Entladungslampe (La) gekoppelt ist; und
- einer Überwachungs- und Steuervorrichtung (22), die zwischen die erste (16) und die zweite Spannungsschiene (18) gekoppelt ist, und mindestens einen Eingangsanschluss aufweist, der mit der mindestens einen Entladungslampe (La) koppelbar ist, um mindestens einen Betriebsparameter der mindestens einen Entladungslampe (La) zu überwachen;
**dadurch gekennzeichnet, dass**
das elektronische Betriebsgerät weiterhin genau ein Auskoppelnetzwerk (24) mit genau einem Eingangsanschluss (E4) und mindestens einem Ausgangsanschluss (A5) umfasst, wobei der eine Eingangsanschluss (E4) des Auskoppelnetzwerks (24) mit einer der Spannungsschienen (16, 18) verbunden ist und wobei der mindestens eine Ausgangsanschluss (A5) des Auskoppelnetzwerks (24) mit einem der Pole (L, N) gekoppelt ist,
wobei das Auskoppelnetzwerk (24) mindestens einen Kondensator umfasst, der seriell zwischen den Einganqsanschluss (E4) des Auskoppelnetzwerks (24) und den mindestens einen Ausgangsanschluss (A5) des Auskoppelnetzwerks (24) gekoppelt ist
und wobei der Kondensator eine Kapazität zwischen 1 pF und 1 nF aufweist, insbesondere zwischen 10 pF und 100 pF.

2. Elektronisches Betriebsgerät nach Anspruch 1,
**dadurch gekennzeichnet, dass**
der erste Pol (L) einen Line-Anschluss und der zweite Pol (N) einen Neutral-Anschluss darstellt.

3. Elektronisches Betriebsgerät nach Anspruch 1,
**dadurch gekennzeichnet, dass**
der erste Pol (L) einen Plus-Anschluss und der zweite Pol (N) einen Minus-Anschluss darstellt.

4. Elektronisches Betriebsgerät nach einem der vorhergehenden Ansprüche,
**dadurch gekennzeichnet,**
**dass** das elektronische Betriebsgerät in eine Leuchte der Schutzklasse II integriert ist.

5. Elektronisches Betriebsgerät nach einem der vorhergehenden Ansprüche,
**dadurch gekennzeichnet,**
**dass** die Kopplung des mindestens einen Ausgangsanschlusses (A5) des Auskoppelnetzwerks (24) mit einem der Pole (L, N) auf der Seite der Filtervorrichtung (10, 12) liegt, die dem zweipoligen Anschluss (L, N) gegenüberliegt.

6. Elektronisches Betriebsgerät nach einem der vorhergehenden Ansprüche,
**dadurch gekennzeichnet,**
**dass** die Filtervorrichtung eine erste Teilfiltervorrichtung (10) und eine zweite Teilfiltervorrichtung (12) umfasst, die seriell zwischen den zweipoligen Anschluss (L, N) und den Gleichrichter (14) gekoppelt sind, wobei die Kopplung des mindestens einen Ausgangsanschlusses (A5) des Auskoppelnetzwerks (24) mit einem der Pole (L, N) zwischen der ersten (10) und der zweiten Teilfiltervorrichtung (12) liegt.

7. Elektronisches Betriebsgerät nach einem der vorhergehenden Ansprüche,
**dadurch gekennzeichnet,**
**dass** das Auskoppelnetzwerk (24) derart zwischen eine der Spannungsschienen (16, 18) und einen der Pole (L, N) gekoppelt ist, dass durch das Auskoppelnetzwerk (24) mindestens eine Induktivität der Filtervorrichtung überbrückt wird.

8. Elektronisches Betriebsgerät nach einem der vorhergehenden Ansprüche,
**dadurch gekennzeichnet,**
**dass** die Überwachungs- und Steuervorrichtung (22) als integrierte Schaltung, insbesondere als ASIC, ausgeführt ist.

## Claims

1. Electronic operating device for operating at least one discharge lamp (La) having
- a two-pole connection for connection of the electronic operating device to a supply voltage having a first pole (L) and a second pole (N);
- a filter apparatus (10, 12), which is coupled to the two-pole connection, for filtering EMC interference;
- a rectifier (14), which is coupled to the filter apparatus (10, 12) and has a first output connection (A1) and a second output connection (A2), wherein the first output connection (A1) is coupled to a first voltage rail (16) in order to provide a first reference potential, and the second output connection (A2) is coupled to a second voltage rail (18) in order to provide a second reference potential, wherein the rectifier (14) is designed to provide a DC voltage between its first output connection (A1) and its second output connection (A2);
- an inverter (26) having at least one first electronic switch (S1) and one second electronic switch (S2), which is coupled between the first voltage rail (16) and the second voltage rail (18), wherein the center point of the inverter (26) is coupled to a connection for the at least one discharge lamp (La); and
- a monitoring and control apparatus (22), which is coupled between the first voltage rail (16) and the second voltage rail (18) and has at least one input connection which can be coupled to the at least one discharge lamp (La), in order to monitor at least one operating parameter of the at least one discharge lamp (La);
**characterized in that**
the electronic operating device furthermore has exactly one output network (24) having exactly one input connection (E4) and at least one output connection (A5), wherein the one input connection (E4) of the output network (24) is connected to one of the voltage rails (16, 18), and wherein the at least one output connection (A5) of the output network (24) is coupled to one of the poles (L, N), wherein the output network (24) has at least one capacitor, which is coupled in series between the input connection (E4) of the output network (24) and the at least one output connection (A5) of the output network (24), and wherein the capacitor has a capacitance between 1 pF and 1 nF, in particular between 10 pF and 100 pF.

2. Electronic operating device according to Claim 1,
**characterized in that**
the first pole (L) represents a line connection, and the second pole (N) represents a neutral connection.

3. Electronic operating device according to Claim 1,
**characterized in that**
the first pole (L) represents a positive connection, and the second pole (N) represents a negative connection.

4. Electronic operating device according to one of the preceding claims,
**characterized**
**in that** the electronic operating device is integrated in a protection class II light.

5. Electronic operating device according to one of the preceding claims,
**characterized**
**in that** the coupling of the at least one output connection (A5) of the output network (24) to one of the poles (L, N) is located on that side of the filter apparatus (10, 12) which is opposite the two-pole connection (L, N).

6. Electronic operating device according to one of the preceding claims,
**characterized**
**in that** the filter apparatus comprises a first partial filter apparatus (10) and a second partial filter apparatus (12) which are coupled in series between the two-pole connection (L, N) and the rectifier (14), wherein the coupling of the at least one output connection (A5) of the output network (24) to one of the poles (L, N) is located between the first partial filter apparatus (10) and the second partial filter apparatus (12).

7. Electronic operating device according to one of the preceding claims,
**characterized**
**in that** the output network (24) is coupled between one of the voltage rails (16, 18) and one of the poles (L, N) such that the output network (24) bridges at least one inductance of the filter apparatus.

8. Electronic operating device according to one of the preceding claims,
**characterized**
**in that** the monitoring and control apparatus (22) is in the form of an integrated circuit, in particular an ASIC.

## Revendications

1. Appareil de commande électronique pour faire fonctionner au moins une lampe à décharge (La) comprenant
- une borne bipolaire pour connecter l'appareil de commande électronique à une tension d'alimentation, ayant un premier pôle (L) et un deuxième pôle (N) ;
- un dispositif de filtrage (10, 12) couplé à la borne bipolaire pour le filtrage des perturbations CEM ;
- un redresseur (14), couplé au dispositif de filtrage (10, 12) et ayant une première (A1) et une deuxième borne de sortie (A2), la première borne de sortie (A1) étant couplée à un premier rail de tension (16) pour fournir un premier potentiel de référence et la deuxième borne de sortie (A2) étant couplée à un deuxième rail de tension (18) pour fournir un deuxième potentiel de référence, le redresseur (14) étant conçu pour fournir une tension continue entre sa première (A1) et sa deuxième borne de sortie (A2);
- un onduleur (26) avec au moins un premier (S1) et un deuxième commutateur électronique (S2) couplé entre le premier (16) et le deuxième rail de tension (18), le centre de l'onduleur (26) étant couplé à une borne pour ladite au moins une lampe à décharge (La) ; et
- un dispositif de surveillance et de commande (22), couplé entre le premier (16) et le deuxième rail de tension (18) et ayant au moins une borne d'entrée pouvant être couplée à ladite au moins une lampe à décharge (La) afin de surveiller au moins un paramètre de fonctionnement de ladite au moins une lampe à décharge (La),
**caractérisé en ce que**
l'appareil de commande électronique comprend en outre précisément un réseau de découplage (24) ayant précisément une borne d'entrée (E4) et au moins une borne de sortie (A5), ladite une borne d'entrée (E4) du réseau de découplage (24) étant reliée à l'un des rails de tension (16, 18) et ladite au moins une borne de sortie (A5) du réseau de découplage (24) étant couplée à l'un des pôles (L, N),
le réseau de découplage (24) comprenant au moins un condensateur, couplé en série entre la borne d'entrée (E4) du réseau de découplage (24) et la au moins une borne de sortie (A5) du réseau de découplage (24),
et le condensateur ayant une capacité comprise entre 1 pF et 1 nF, en particulier entre 10 pF et 100 pF.

2. Appareil de commande électronique selon la revendication 1,
**caractérisé en ce que**
le premier pôle (L) constitue une borne Line et le deuxième pôle (N) une borne Neutre.

3. Appareil de commande électronique selon la revendication 1,
**caractérisé en ce que**
le premier pôle (L) constitue une borne positive et le deuxième pôle (N) une borne négative.

4. Appareil de commande électronique selon l'une des revendications précédentes,
**caractérisé en ce que**
l'appareil de commande électronique est intégré dans un luminaire de classe de protection II.

5. Appareil de commande électronique selon l'une des revendications précédentes,
**caractérisé en ce que**
le couplage de ladite au moins une borne de sortie (A5) du réseau de découplage (24) à l'un des pôles (L, N) est situé sur le côté opposé à la borne bipolaire (LN) du dispositif de filtrage (10, 12).

6. Appareil de commande électronique selon l'une des revendications précédentes,
**caractérisé en ce que**
le dispositif de filtrage comprend un premier dispositif de filtrage partiel (10) et un deuxième dispositif de filtrage partiel (12) couplés en série entre la borne bipolaire (L, N) et le redresseur (14), le couplage de ladite au moins une borne de sortie (A5) du réseau de couplage (24) à l'un des pôles (L, N) étant situé entre le premier (10) et le deuxième dispositif de filtrage partiel (12).

7. Appareil de commande électronique selon l'une des revendications précédentes,
**caractérisé en ce que**
le réseau de découplage (24) est couplé entre l'un des rails de tension (16, 18) et l'un des pôles (L, N) de telle façon qu'au moins une inductance du dispositif de filtrage est shuntée par le réseau de découplage (24).

8. Appareil de commande électronique selon l'une des revendications précédentes,
**caractérisé en ce que**
le dispositif de surveillance et de commande (22) est réalisé sous la forme d'un circuit intégré, en particulier sous la forme d'un ASIC.
